# EUROPÄISCHE PATENTANMELDUNG

(11) **EP 0 879 773 A2**
(43) Veröffentlichungstag der Anmeldung: **25.11.1998**
(21) Anmeldenummer: 97117927.0
(22) Anmeldetag: 16.10.1997
(51) Int. Cl.: B65D 85/68, B65D 19/44

(54) **Transportsystem für Zweiradfahrzeuge**

(30) Priorität: 23.05.1997 DE 29709049 U; 08.09.1997 DE 29716047 U
(71) Anmelder: Krone, Klaus Dieter Wilhelm, 28857 Syke (DE); Laue, Harald Karl Heinrich, 31675 Bückeburg (DE)
(72) Erfinder: Krone, Klaus Dieter Wilhelm, 28857 Syke (DE)
(74) Vertreter: von Ahsen, Erwin-Detlef

(57) **Zusammenfassung**

Bekannte Transportsysteme für Zweiradfahrzeuge, insbesondere Motorroller (20), Motorräder oder Mopeds, verfügen über eine Palette (21), die je eine Aufnahme (25, 26) für ein Vorderrad (27) und ein Hinterrad (47) des Zweiradfahrzeugs (20) aufweisen. Auf dieser Palette (21) werden die Zweiradfahrzeuge mit Gurten verzurrt. Dies führt häufig zu Beschädigungen an den Zweiradfahrzeugen. Zur Vermeidung dieses Nachteils ist das erfindungsgemäße Transportsystem dadurch gekennzeichnet, daß das Zweiradfahrzeug (20) durch wenigstens einen zwingenartigen Niederhalter (28) auf der Palette (21) fixierbar ist.

## Beschreibung

Die Erfindung betrifft ein Transportsystem für Zweiradfahrzeuge, insbesondere Motorroller, Motorräder oder Mopeds, mit einer Palette, die je eine Aufnahme für ein Vorderrad und ein Hinterrad des Zweiradfahrzeugs aufweist.

Derartige Transportsysteme sind für den Transport von Motorrollern seit langem aus der Praxis bekannt. Paletten solcher Transportsysteme weisen einen äußeren Rahmen auf, innerhalb dessen die Aufnahmen für das Vorder- und Hinterrad des Motorrollers angeordnet sind. Der Motorroller wird mit Vorderrad und Hinterrad in diese Aufnahmen gestellt und sodann mittels Spanngurten auf der Palette festgezurrt. Diese Spanngurte werden üblicherweise über Verkleidungsteile und/oder die Sitzbank des Motorrollers gelegt. Die aus Kunststoff bestehenden Verkleidungsteile und die Sitzbank werden hierdurch stark deformiert. Dabei kommt es häufig sogar zu plastischen Verformungen, die auch nach Lösen der Gurte nicht mehr zurückgehen. Ein weiterer Nachteil des bekannten Systems ist, daß der Motorroller mit den Gurten relativ starr auf der Palette festgezurrt wird. Bei Brems- und Anfahrbewegungen von Eisenbahnzügen bzw. Lastkraftwagen reiben Teile des Motorrollers an den Gurten. Hierdurch scheuern die Gurte nicht nur an den Teilen des Motorrollers, sie können sich dabei auch lösen und die Motorroller umstürzen. Auch dieses führt zu Beschädigungen der Motorroller. Gleiches gilt auch im Seegang beim Transport an Bord von Schiffen.

Hiervon ausgehend liegt der Erfindung das Problem zugrunde, ein Transportsystem für Zweiradfahrzeuge zu schaffen, durch welches das Zweiradfahrzeug sicher fixierbar ist, ohne daß es zu Beschädigungen am Zweiradfahrzeug kommen kann.

Zur Lösung dieses Problems ist das erfindungsgemäße Transportsystem dadurch gekennzeichnet, daß das Zweiradfahrzeug durch wenigstens einen zwingenartigen Niederhalter auf der Palette fixierbar ist.

Bei dem erfindungsgemäßen Transportsystem wird das Zweiradfahrzeug ebenfalls mit dem Vorder- und Hinterrad in die entsprechenden Aufnahmen der Palette gestellt und sodann mittels des zwingenartigen Niederhalters fixiert. Der Niederhalter kann dabei so angeordnet werden, daß unempfindliche Teile des Zweiradfahrzeugs durch den Niederhalter beaufschlagt werden. Der Niederhalter gleicht auch Erschütterungen und dergleichen während des Transports durch elastische Verformungen sanft aus. Beschädigungen am Zweiradfahrzeug während des Transports werden hierdurch zuverlässig vermieden.

Vorzugsweise drückt der Niederhalter zum Fixieren des Zweiradfahrzeugs auf eine Fußauflage am Zweiradfahrzeug. Im Falle eines Motorrollers ist die Fußauflage ein Trittbrett; im Falle eines Motorrads oder Mopeds eine Fußraste. Eine besonders sichere Fixierung des Zweiradfahrzeugs ergibt sich, wenn zu beiden Seiten des Zweiradfahrzeugs je ein Niederhalter angeordnet ist.

Weitere Merkmale der Erfindung beziehen sich auf die konstruktive Ausgestaltung des Niederhalters und auf Einrichtungen zum Stapeln der Paletten.

Die Erfindung wird nachfolgend anhand der Zeichnungen näher erläutert. In dieser zeigen:
- Fig. 1: ein Transportsystem mit den Erfindungsmerkmalen mit einem darauf befestigten Motorroller in Seitenansicht,
- Fig. 2: einen Niederhalter für das erfindungsgemäße Transportsystem in einer Vorderansicht,
- Fig. 3: eine Palette für das erfindungsgemäße Transportsystem in Draufsicht,
- Fig. 4: die Palette gemäß Fig. 3 in Seitenansicht,
- Fig. 5: die Palette gemäß Fig. 3 in Frontansicht,
- Fig. 6: die Palette gemäß Fig. 3 in Rückansicht,
- Fig. 7: ein Transportsystem mit zwei übereinander gestapelten Paletten in Seitenansicht,
- Fig. 8: das Transportsystem gemäß Fig. 7 in Frontansicht,
- Fig. 9: eine Ecklasche für eine Palette eines Transportsystem gemäß Fig. 7 in Draufsicht,
- Fig. 10: ein Detail des Transportsystems gemäß Fig. 7 in Seitenansicht,
- Fig. 11: eine zweite Ausführungsform für einen Niederhalter für das erfindungsgemäße Transportsystem in Frontansicht,
- Fig. 12: ein Detail des Niederhalters gemäß Fig. 11 in Frontansicht,
- Fig. 13: ein Transportsystem mit zwei übereinander gestapelten Paletten, gemäß einer zweiten Ausführungsform in perspektivischer Darstellung,
- Fig. 14: ein Detail des Transportsystems gemäß Fig. 13 in Seitenansicht,
- Fig. 15: ein weiteres Detail des Transportsystems gemäß Fig. 12 in perspektivischer Darstellung,
- Fig. 16: das Detail gemäß Fig. 15 in einem Horizontalschnitt,
- Fig. 17: eine weitere Ausführungsform eines Transportsystems mit den Erfindungsmerkmalen in perspektivischer Darstellung,
- Fig. 18: einen Niederhalter für das Transportsystem gemäß Fig. 17 in perspektivischer Darstellung.

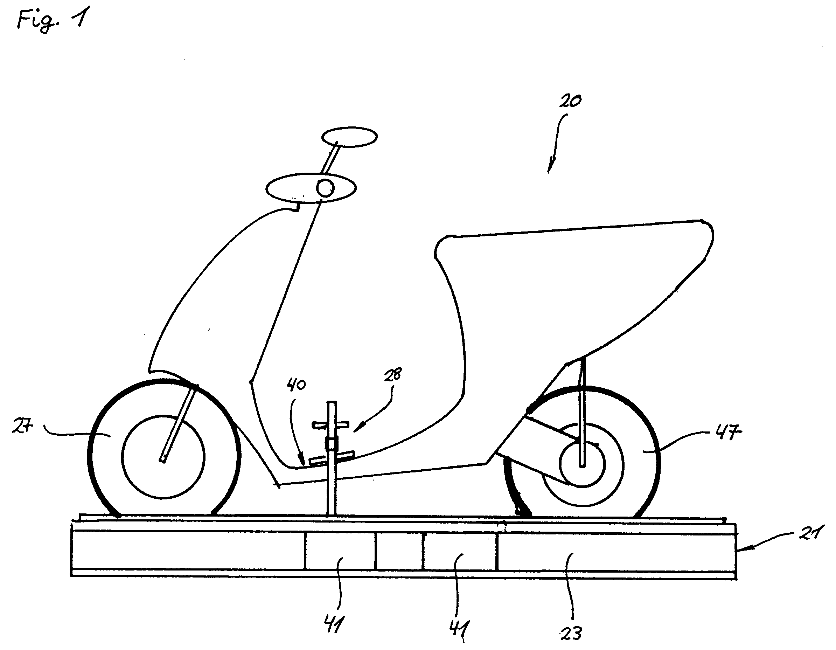

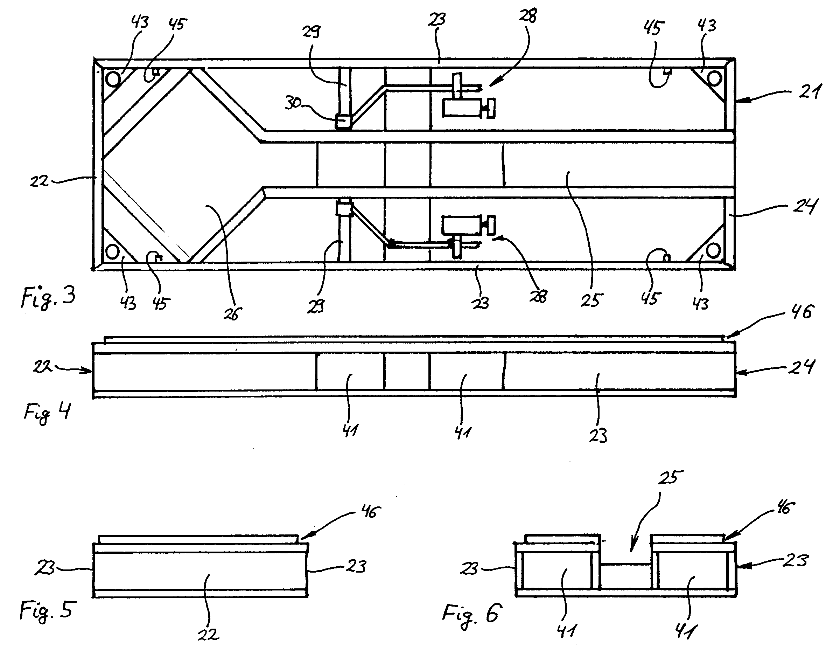

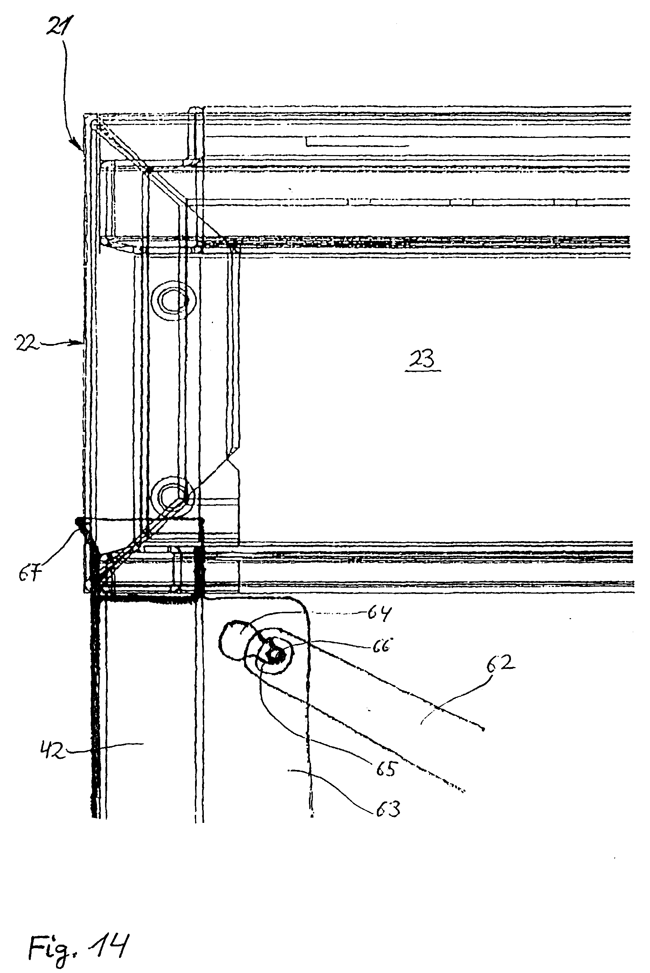

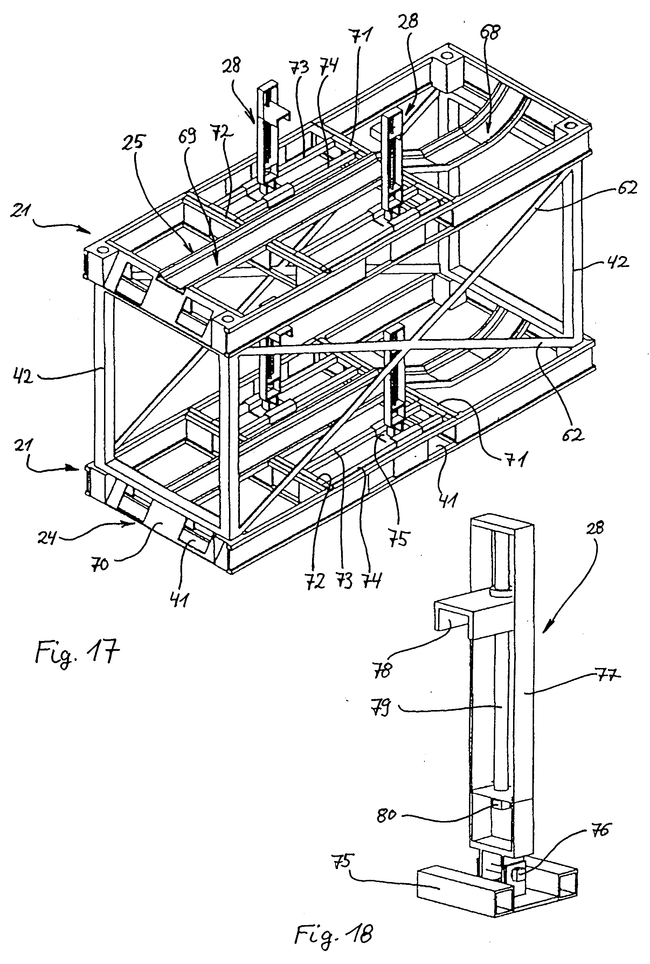

Mit dem erfindungsgemäßen Transportsystem werden Zweiradfahrzeuge, beispielsweise Motorroller 20, Motorräder oder Mopeds, auf Paletten 21 transportiert. In den Fig. 1 bis 15 sind Transportsysteme für Motorroller 20 und in den Fig. 17 und 18 für Motorräder oder Mopeds gezeigt.

Nachfolgend wird zunächst die Ausführungsform gemäß Fig. 1 bis 6 näher erläutert:

Die Paletten 21 weisen einen äußeren Rahmen mit einer Vorderwand 22, zwei Seitenwänden 23 und einer Rückwand 24 auf. In die Palette 21 wird der Motorroller 20 von der Rückseite her eingeschoben. Die Palette 21 weist zu diesem Zweck eine Schiene 25 auf. Die Schiene 25 mündet in ihrem vorderen Teil in einer Aufnahme 26 für ein Vorderrad 27 des Motorrollers 20. Die Schiene 25 bildet gleichzeitig eine Aufnahme für ein Hinterrad 47 des Motorrollers 20. Der Motorroller 20 steht, wie in Fig. 1 gezeigt, auf der Palette 21. Dabei ist das Vorderrad 27 in eingeschlagener Position in der Aufnahme 26 angeordnet.

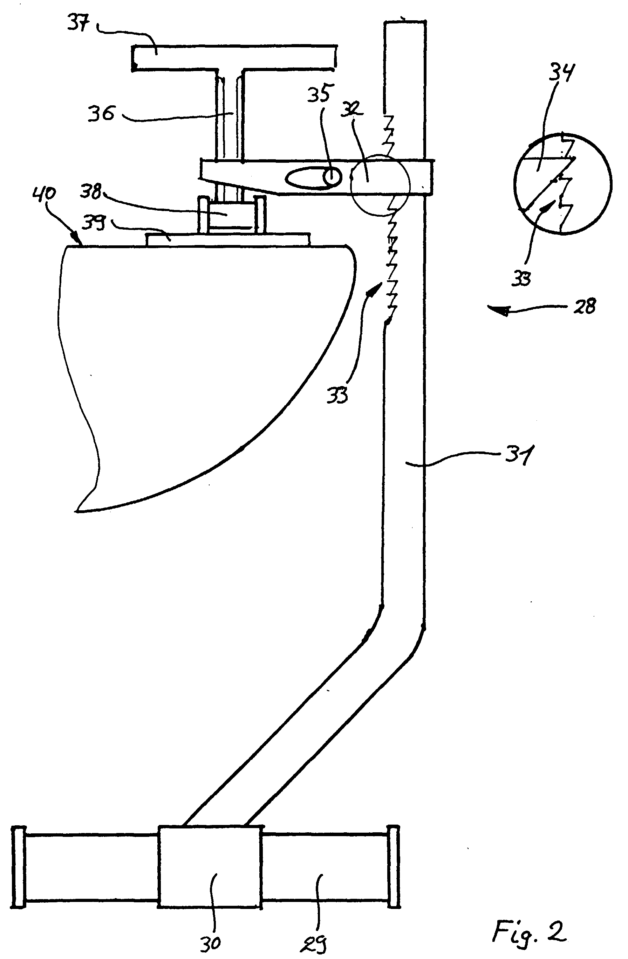

Zum Fixieren des Motorrollers 20 auf der Palette 21 während des Transports dienen zwei zwingenartig ausgebildete Niederhalter 28. Die Niederhalter 28 sind auf- und abschwenkbar jeweils an einem Rohr 29 befestigt, das zwischen der Schiene 25 und jeweils einer Seitenwand 23 befestigt ist und quer zur Längserstreckung der Palette 21 verläuft. Der Niederhalter 28 weist zu diesem Zweck eine Muffe 30 auf, so daß der Niederhalter 28 auch in Axialrichtung des Rohres 29 hin- und her verschoben werden kann. Die Transporteinrichtung ist hierdurch für unterschiedlich breite Motorroller 20 geeignet. Besonders vorteilhaft ist es, wenn die Muffe 30 beispielsweise durch eine Schraubenfeder (nicht dargestellt) stets auf dem Rohr 29 nach außen, daß heißt in der Darstellung gem. Fig. 2 nach rechts, gedrückt wird. Das Be- und Entladen der Palette 21 mit einem Motorroller 20 wird hierdurch erleichtert, da der Niederhalter 28 stets nach außen vom Motorroller 20 weggedrückt wird. Der Niederhalter 28 wird im beladenen Zustand gegen die Federkraft auf die Breite des Motorrollers 20 eingestellt und durch das Verspannen des Motorrollers 20 fixiert.

An der Muffe 30 ist ein im vorliegenden Fall abgewinkeltes Rohr 31 beispielsweise durch Schweißen befestigt. An diesem Rohr 31 ist ein in Axialrichtung des Rohres verschiebbar angeordneter Ausleger 32 angebracht. Das Rohr 31 weist in diesem Bereich eine Rasterung 33 auf, die mit einem Rastzahn 34 am Ausleger 32 zusammenwirkt. Der Rastzahn 34 wird beispielsweise durch Federkraft gegen die Rasterung 33 bzw. das Rohr 31 gedrückt und kann mit Hilfe eines Zapfens 35 zurückgezogen werden. Durch Lösen des Rastzahns 34 kann der Ausleger somit in Axialrichtung des Rohres 31 verschoben werden. Die Rasterung 32 ist vorteilhafterweise sägezahnartig ausgebildet, so daß der Ausleger 32 in Richtung auf die Muffe 30 verschoben werden kann, ohne daß dabei der Zapfen 35 betätigt werden muß.

An seinem anderen Ende weist der Ausleger 32 eine Gewindebohrung auf, die durch eine Gewindespindel 36 durchsetzt ist. Die Gewindespindel 36 kann mittels eines Handgriffs 37 gedreht werden. An ihrem dem Handgriff 37 gegenüberliegenden Ende ist die Gewindespindel 36 über ein Gelenk 38 mit einer Druckplatte 39 verbunden. Diese Druckplatte 39 drückt zum Fixieren des Motorrollers 20 auf der Palette 21 auf ein Trittbrett 40 des Motorrollers 20.

Zum Beladen der Palette 21 wird, wie oben beschrieben, der Motorroller 20 zunächst von hinten in die Palette 21 eingefahren. Sodann werden die zu beiden Seiten des Motorrollers 20 angeordneten Niederhalter 28 nach oben geschwenkt und die Druckplatten 39 zunächst durch Niederdrücken des Auslegers 32 mit Hilfe der Rasterung 33 grob auf die Trittbretter 40 gedrückt. Die endgültige Verspannung erfolgt dann mittels der Spindel 36 mit dem Handgriff 37 durch Herunterschrauben der Druckplatte 39.

Alternativ zum Handgriff 37 kann auch ein Sechskant vorgesehen sein, so daß die Spindel 36 mittels einem Drehmomentschlüssel definiert zum Verspannen heruntergeschraubt werden kann.

Der Motorroller 20 ist hierdurch sicher auf der Palette 21 fixiert. Aufgrund der Eigenschaften der Niederhalter 28 können sogar Stöße, wie sie beispielsweise beim Rangieren von Eisenbahnwaggons oder dergleichen entstehen, ohne Beschädigungen des Motorrollers 20 abgefedert werden.

Zum Beladen von Eisenbahnwaggons, Lastkraftwagen oder dergleichen mit den ihrerseits beladenen Paletten 21 wird üblicherweise ein Gabelstapler verwendet. Die Palette 21 weist zu diesem Zweck in beiden Seitenwänden 23 und in der Rückwand 24 je zwei Aufnahmen 41 für die Gabeln eines Gabelstaplers bzw. Hinbwagens auf.

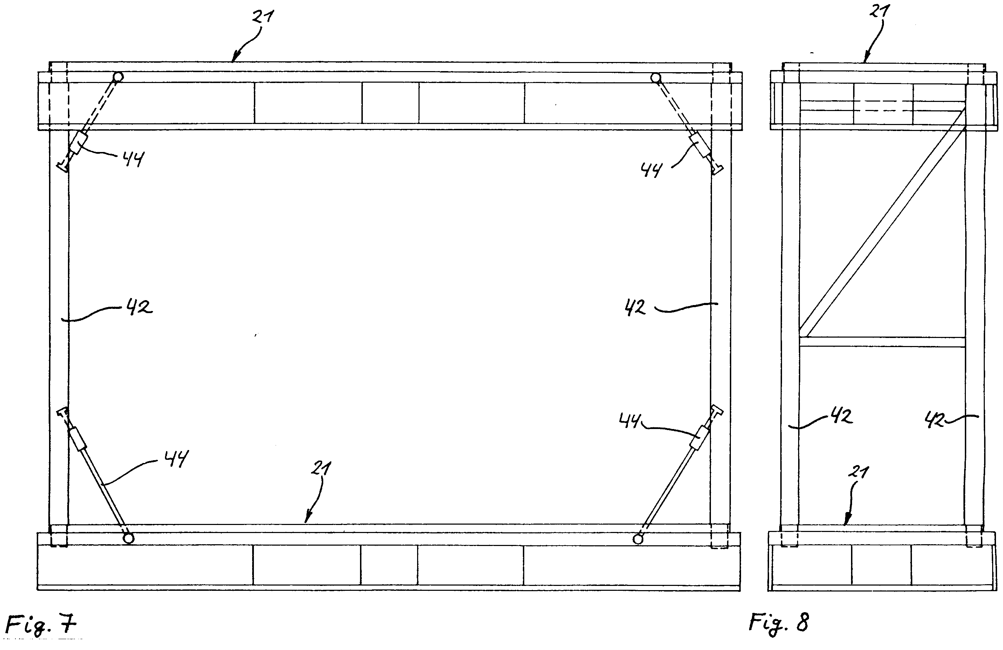

Die Höhe üblicher Eisenbahnwaggons oder Lastkraftwagen ist ausreichend, um zwei Motorroller 20 übereinander transportieren zu können. Das erfindungsgemäße Transportsystem ist deshalb so ausgebildet, daß zwei Paletten 21 übereinandergestapelt transportiert werden können. Dieses ist in den Fig. 7 und 8 näher gezeigt.

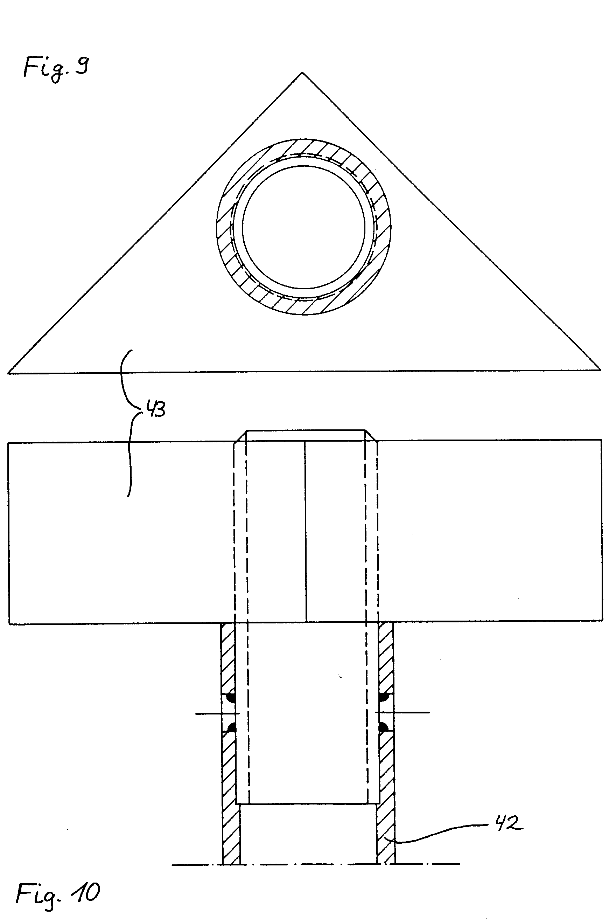

Die mit Motorrollern 20 beladenen Paletten 21 werden mittels Stapelrohren 42 übereinander gestapelt. Die Stapelrohre 42 werden dabei in Ecklaschen 43 der Paletten 21 gesteckt, oder, wie in Fig. 9 und 10 gezeigt, eingeschraubt. Zum Versteifen des Gestells aus zwei Paletten 21 und den Stapelrohren 42 dienen, wie in Fig. 7 erkennbar, Spannschlösser 44, die einerseits mit den Stapelrohren 42 und andererseits mit der Palette 21 verbunden sind. An den Seitenwänden 23 der Palette 21 sind zu diesem Zweck Ösen 45 vorgesehen.

Aufgrund der erfindungsgemäßen Ausbildung der Paletten 21 können beispielsweise für Lagerzwecke auch drei oder mehr Paletten 21 übereinandergestapelt werden.

Auch im leeren Zustand sind die Paletten 21 für den Rücktransport stapelbar. Am oberen Rand der Palette 21 ist zu diesem Zweck ein umlaufender Absatz 46 vorgesehen, der mit einer entsprechenden Ausnehmung in der Unterseite der Palette 21 korrespondiert.

Die Paletten 21 sind im vorliegenden Fall als Aluminium-Schweißkonstruktion ausgebildet. Die Paletten 21 weisen somit ein geringes Eigengewicht auf.

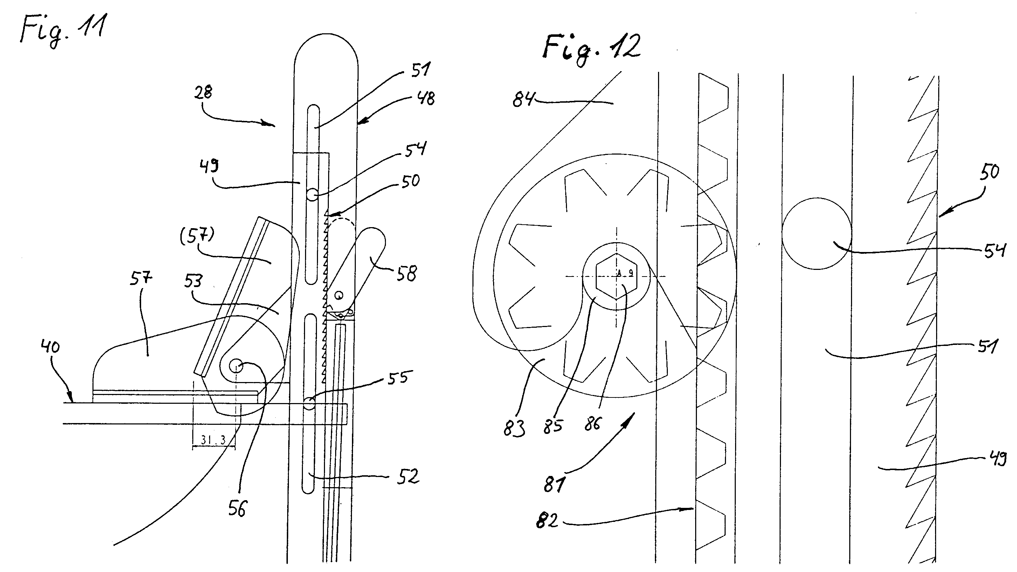

Eine alternative Ausführungsform für einen Niederhalter 28 ist in Figur 11 gezeigt. Der Niederhalter 28 weist hier anstelle des Rohres 31 ein aufrecht weisendes U-Profil 48 auf. In dieses U-Profil 48 ist eine Rastschiene 49 auf- und abbewegbar eingesetzt, die auf ihrer nach außen weisenden Seite eine Sägezahnverzahnung 50 aufweist. In zwei in dem U-Profil 48 eingefräst Langlöcher 51, 52 ist die Rastschiene 49 mittels je eines Bolzens 54, 55 geführt.

An Rastschiene 49 ist ein Ausleger 53 angebracht. An dem Ausleger 53 ist durch ein Gelenk 56 ein Druckstück 57 auf- und abschwenkbar angebracht. Das Druckstück 57 ist in Fig. 11 in beiden Positionen gezeigt. Das Druckstück 57 drückt im beladenen Zustand der Palette 21 wiederum auf das Trittbrett 40 des Motorrollers 20 und fixiert so den Motorroller 20

An dem U-Profil 48, und zwar an der Innenseite desselben, ist ein Ratschenbügel 58 schwenkbar angebracht. Der Ratschenbügel 58 weist einen Arretierzahn auf, der mit der Sägezahnverzahnung 50 korrespondiert. Hierdurch kann der Ausleger 53 nach unten gedrückt werden, ist jedoch in Aufwärtsrichtung blockiert. Durch Drücken des Ratschenbügels 58 gegen die Rastschiene 49 wird die Rastverbindung des Ratschenbügels 58 mit der Sägezahn-Verzahnung 50 aufgehoben werden, und der Ausleger 53 ist nach oben verschiebbar.

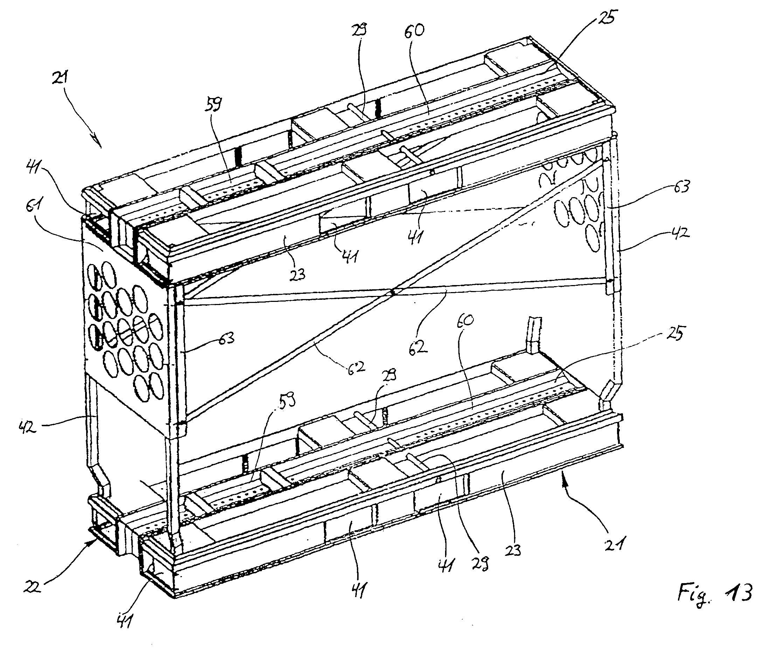

Um den Motorroller 20 ausreichend verspannen zu können, reicht oft ein bloßes Herunterdrücken des Druckstücks 57 nicht aus. Der Niederhalter 28 kann deshalb eine in Fig. 12 näher gezeigte Verspannungseinrichtung 81 aufweisen. An der dem Motorroller 20 zugewandten Seite weist die Rastschiene 49 eine Verzahnung 82 auf. Diese wirkt mit einem Zahnrad 83 am U-Profil 48 zusammen. Das Zahnrad 83 ist dabei drehbar in einem Lagerbock 84 gelagert, der fest mit dem U-Profil 48 verbunden ist. Eine Welle 85 des Zahnrads 83 ist an einem Ende mit einem Sechskant 86 versehen, so daß der Motorroller wiederum mittels eines Drehmomentschlüssels definiert verspannt werden kann.

Beim Beladen der Palette 21 mit einem Motorroller 20 wird wie oben beschrieben der Niederhalter nach oben und das Druckstück 57 auf das Trittbrett 40 des Motorrollers 20 geschwenkt. Sodann kann durch nach unten Treten des Druckstück 57 und somit des Auslegers 53 der Niederhalter 28 verspannt und somit der Motorroller 20 gesichert werden. Zum Entladen der Palette 21 wird der Ratschenbügel 58 wie zuvor beschrieben gelöst und der Niederhalter 28 kann vom Trittbrett 40 weggeschwenkt werden.

Für eine Ausreichende Verspannung des Motorrollers 20 sollte die Druckplatte 39 (Fig. 2) bzw. das Druckstück 57 (Fig. 11) soweit heruntergeschraubt bzw. -drückt werden, daß der Motorroller 20 einfedert.

Figur 13 zeigt eine alternative Ausführungsform des gesamten Transportsystems. Die Niederhalter 28 an den Paletten 21 sind aus Gründen der Vereinfachung weggelassen. Der Motorroller 20 wird hier gemäß der Zeichnungsdarstellung von links in die Palette 21 eingeschoben. Innerhalb der Schiene 25 sind Aufnahmen 59 für das Hinterrad sowie Vorderradschiene 60 vorgesehen. Die Schiene 25 ist durch Kantungen abgerundet. Das Transportsystem mit zwei übereinander gestapelten Paletten 21 gemäß Fig. 13 ist im vorliegenden Fall in einer Richtung quer zum Motorroller 20 durch Lochbleche 61 stabilisiert, die an den Stirnseiten des Transportsystems angebracht sind. In Längsrichtung des Motorrollers 20 ist das Transportsystem durch die Diagonalstreben 62 stabilisiert. Diese werden an einer Lasche 63 am Stapelrohr 42 befestigt. Hierzu weist die Lasche 63 eine Bohrung 64 mit einem Langlochansatz 65 auf. Der Langlochansatz 65 weist jeweils nach innen in Längsrichtung der Diagonalstreben 62. An den Enden der Diagonalstreben 62 ist jeweils ein Haltebolzen 66 angebracht, der durch die Bohrung 64 hindurch gesteckt werden kann, jedoch im Langlochansatz 65 durch nach außen Drücken des Stapelrohres 42 formschlüssig fixiert ist. Das nach außen Drücken der Stapelrohre 42 wird dabei durch eine trichterförmige Ecklasche 67 am oberen Ende des Stapelrohres 42 bewirkt. Durch Einsetzen der oberen Palette 21 in die vorbereiteten Stapelrohre 42 werden die Stapelrohre 42 nach außen gedrückt und so die Diagonalstreben 62 durch den Haltebolzen 66 im Langlochansatz 65 formschlüssig gehalten.

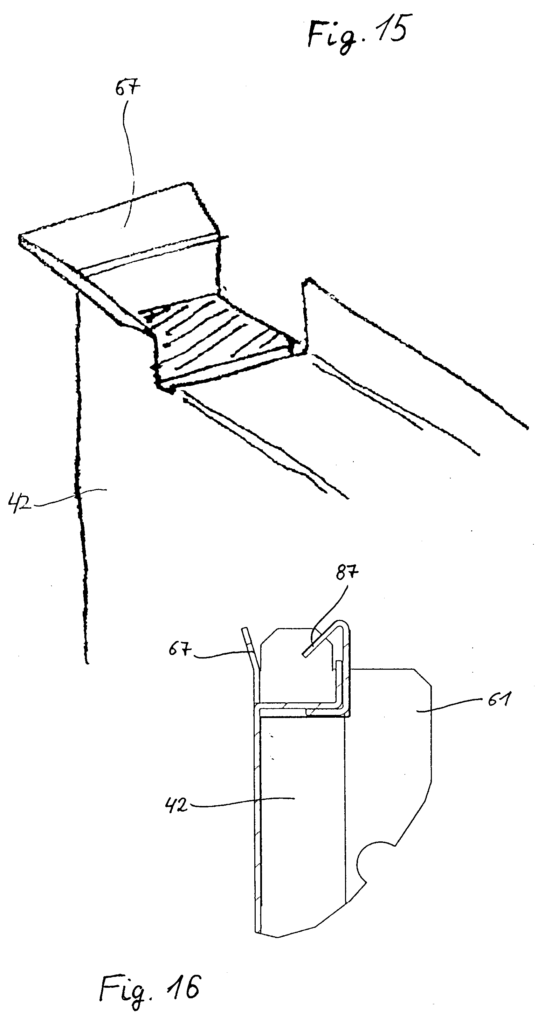

Eine Verriegelung der oberen Palette 21 an den Stapelrohren 42 ist in Fig. 16 näher gezeigt. Hierfür ist an den Stapelrohren 42 eine Federlasche 87 vorgesehen. Diese hintergreift die obere Palette 21, so daß diese gesichert ist. Zum Lösen der oberen Palette 21 wird die Federlasche 87 in der Darstellung gemäß Fig. 16 nach rechts gedrückt, so daß die Palette 21 abgehoben werden kann.

Die Verriegelung der Stapelrohre 42 in der unteren Palette 21 (nicht dargestellt) geschieht mittels Sicherungsbolzen. Diese sind von der Innenseite der Palette 21 betätigbar und können durch ein gemeinsames Betätigungseil betätigt werden.

In den Fig. 17 und 18 ist ein Transportsystem gezeigt, welches vornehmlich für Motorräder oder Mopeds gedacht ist. Die Palette 21 ist ähnlich aufgebaut, wie in den vorbeschriebenen Ausführungsformen. Die Schiene 25 ist ähnlich ausgebildet, wie in dem Ausführungsbeispiel gem. Fig. 13, jedoch ist die Aufnahme für ein Vorderrad des Motorrades oder Mopeds als Mulde 68 ausgebildet. Der hintere Teil der Schiene 25 bildet eine Aufnahme 69 für das Hinterrad des Motorrades oder Mopeds. Um das Motorrad oder Moped leichter auf die Palette 21 aufschieben zu können, ist der mittlere Bereich der Rückwand 24 mit einer Schräge 70 versehen. Weiterhin unterscheidet sich die Palette 21 für die vorliegende Ausführungsform von den vorbeschriebenen Ausführungsformen durch zwei im mittleren Bereich angeordnete Querholme 71, 72.

Zwischen den Querholme 71, 72 sind zu beiden Seiten der Schiene 25 je zwei Längsstreben 73, 74 angebracht. An den Längsstreben 73, 74 sind die Niederhalter 28 an einem Schlitten 75 verschiebbar angebracht. Durch geeignete Ausbildung des Schlittens 75 kann der Niederhalter 28 auch längs- und querverfahrbar sein. Hierdurch ist eine optimale Anpassung an die Abmessungen des Motorrades oder Mopeds möglich.

Der eigentliche Niederhalter 28 ist in Fig. 18 näher gezeigt. Er ist durch einen Bolzen 76 schwenkbar mit dem Schlitten 75 verbunden. Der Niederhalter besteht aus einem Ständer 77, an dem ein Druckstück 78 auf- und abbewegbar geführt ist. Das Druckstück 78 ist als nach unten offenes U-Profil ausgebildet. Alternativ kann auch ein nach unten offenes V-Profil oder ein nach unten offenes Halbkreisprofil verwendet werden. Mittels einer Gewindespindel 79, welche drehbar im Ständer 77 gelagert ist, kann das Druckstück 78 auf und ab bewegt werden. Zum Drehen der Gewindespindel 79 dient ein Sechskant 80, der im vorliegenden Fall am unteren Ende der Gewindespindel 79 angeordnet ist; sich gleichwohl aber auch am oberen Ende befinden kann.

Zum Fixieren des Motorrades oder Mopeds wirkt das Druckstück 78 mit einer Fußraste des Motorrades bzw. Mopeds zusammen. Das Druckstück 78 wird dabei nach unten gegen die Fußraste verschraubt, die auf der Innenseite des U-förmigen Profils aufgenommen wird. Zur Vermeidung von Beschädigungen an der Fußraste ist das Druckstück 78 auf der Innenseite seines U-förmigen Profils durch eine nicht gezeigte Polsterung ausgepolstert.

Insbesondere für schwere Motorräder kann es sinnvoll sein, zwei Niederhalter je Seite vorzusehen, so daß das Motorrad sowohl an den hinteren als auch an dien vorderen Fußrasten gehalten werden kann.

Zum ausreichenden Fixieren des Druckstücks 78 im verspannten Zustand ist das Gewinde der Gewindespindel 79 selbsthemmend ausgelegt. Zusätzlich oder alternativ kann die Gewindespindel 79 auch durch eine Verdrehsicherung, beispielsweise einen Splint, fixiert werden.

Die Erfindung ist nicht auf die vorbeschriebenen Ausführungsbeispiele begrenzt. Insbesondere können einzelne Elemente aus den oben genannten Ausführungsbeispielen untereinander ausgetauscht werden. So kann zum Beispiel der Niederhalter 28 gem. Fig. 18 auch mit einer Rastbefestigung gem. Fig. 11 anstelle der Gewindespindel 79 ausgebildet sein.

### Bezugszeichenliste:

- 20: Motorroller
- 21: Palette
- 22: Vorderwand
- 23: Seitenwand
- 24: Rückwand
- 25: Schiene/Aufnahme
- 26: Aufnahme
- 27: Vorderrad
- 28: Niederhalter
- 29: Rohr
- 30: Muffe
- 31: Rohr
- 32: Ausleger
- 33: Rasterung
- 34: Rastzahn
- 35: Zapfen
- 36: Gewindespindel
- 37: Handgriff
- 38: Gelenk
- 39: Druckplatte
- 40: Trittbrett
- 41: Aufnahme
- 42: Stapelrohr
- 43: Ecklasche
- 44: Spannschlösser
- 45: Öse
- 46: Absatz
- 47: Hinterrad
- 48: U-Profil
- 49: Rasterschiene
- 50: Sägezahnverzahnung
- 51: Langloch
- 52: Langloch
- 53: Ausleger
- 54: Bolzen
- 55: Bolzen
- 56: Gelenk
- 57: Druckstück
- 58: Ratschenbügel
- 59: Aufnahme
- 60: Voderradschiene
- 61: Lochblech
- 62: Diagonalstrebe
- 63: Lasche
- 64: Bohrung
- 65: Langlochansatz
- 66: Haltebolzen
- 67: Ecklasche
- 68: Mulde
- 69: Aufnahme
- 70: Schräge
- 71: Querholm
- 72: Querholm
- 73: Längsstrebe
- 74: Längsstrebe
- 75: Schlitten
- 76: Bolzen
- 77: Ständer
- 78: Druckstück
- 79: Gewindespindel
- 80: Sechskant
- 81: Verspannungseinrichtung
- 82: Verzahnung
- 83: Zahnrad
- 84: Lagerbock
- 85: Welle
- 86: Sechskant
- 87: Federlasche

## Patentansprüche

1. Transportsystem für Zweiradfahrzeuge, insbesondere Motorroller (20), Motorräder oder Mopeds, mit einer Palette (21), die je eine Aufnahme (25, 26) für ein Vorderrad (27) und ein Hinterrad (47) des Zweiradfahrzeugs (20) aufweist, dadurch gekennzeichnet, daß das Zweiradfahrzeug (20) durch wenigstens einen zwingenartigen Niederhalter (28) auf der Palette (21) fixierbar ist.

2. Transportsystem nach Anspruch 1, dadurch gekennzeichnet, daß der Niederhalter (28) mit einer Fußauflage (Trittbrett 40, Fußraste) des Zweiradfahrzeugs (20) zusammenwirkt.

3. Transportsystem nach Anspruch 1 oder 2, dadurch gekennzeichnet, daß zu beiden Seiten des Zweiradfahrzeugs (20) je ein Niederhalter (28) angeordnet ist.

4. Transportsystem nach einem der Ansprüche 1 bis 3, dadurch gekennzeichnet, daß der Niederhalter (28) schwenkbar an der Palette (21) angebracht ist.

5. Transportsystem nach einem der Ansprüche 1 bis 4, dadurch gekennzeichnet, daß der Niederhalter (28) in Längsrichtung und/oder Querrichtung des Zweiradfahrzeugs (20) verschiebbar an der Palette (21) angebracht ist.

6. Transportsystem nach einem der Ansprüche 1 bis 5, dadurch gekennzeichnet, daß der Niederhalter (28) eine Rasterung (33,50) aufweist.

7. Transportsystem nach Anspruch 6, dadurch gekennzeichnet, daß die Rasterung (33) sägezahnartig ausgebildet ist.

8. Transportsystem nach einem der Ansprüche 1 bis 7, dadurch gekennzeichnet, daß die Paletten (21) in mit Motorrollern (20) beladenem Zustand mittels Stapelrohren (42) stapelbar sind.

9. Transportsystem nach Anspruch 8, dadurch gekennzeichnet, daß die Stapelrohre (42) in Ecklaschen (43) der Paletten (21) einschraub- oder -steckbar sind.

10. Transportsystem nach Anspruch 8, dadurch gekennzeichnet, daß an den oberen Enden der Stapelrohre (42) trichterförmige Ecklaschen (67) angebracht sind, durch die die Stapelrohre (42) durch Einsetzen einer Palette (21) nach außen gedrückt werden, wodurch Diagonalstreben (62) an den Stapelrohren (42) fixierbar sind.

11. Transportsystem nach einem der Ansprüche 1 bis 10, dadurch gekennzeichnet, daß die Paletten (21) als Aluminium-Schweißkonstruktion ausgebildet sind.
